# EUROPEAN PATENT SPECIFICATION

(11) **EP 4 303 467 B1**
(45) Date of publication and mention of the grant of the patent: **28.01.2026**
(21) Application number: 22183644.8
(22) Date of filing: 07.07.2022
(51) Int. Cl.: F16H 48/08, F16H 48/38, F16H 48/40, F16H 57/023

(54) **DIFFERENTIAL ASSEMBLY AND VEHICLE AND METHOD FOR ASSEMBLING DIFFERENTIAL ASSEMBLY**
DIFFERENTIALANORDNUNG UND FAHRZEUG SOWIE VERFAHREN ZUM ZUSAMMENBAU EINER DIFFERENTIALANORDNUNG
ENSEMBLE DIFFÉRENTIEL ET VÉHICULE ET PROCÉDÉ D'ASSEMBLAGE D'UN ENSEMBLE DIFFÉRENTIEL

(43) Date of publication of application: 10.01.2024
(73) Proprietor: Traton AB, 151 87 Södertälje (SE)
(72) Inventor: FORSBERG, Jörgen, 647 35 Mariefred (SE); KARLSSON, Stefan, 645 61 Stallarholmen (SE); ARNELÖF, Per, 136 66 Vendelsö (SE)
(74) Representative: Scania CV AB

(56) References cited:
- DE-A1- 102019 123 969
- US-A1- 2007 238 572

## Description

### TECHNICAL FIELD

The invention relates to a differential assembly, to a vehicle comprising a differential assembly, and to a method for assembling a differential assembly.

### BACKGROUND

A differential assembly, or differential, is an arrangement of gears that when subjected to an ingoing rotational speed provides for a rotational speed difference between two outgoing rotational speeds, such as the rotational speeds of two outgoing axels.

For instance, a differential assembly may provide for rotational speed differences between two driven wheels on opposite lateral sides of a vehicle when the vehicle is turning.

DE 102019123969 discloses a method of manufacturing a differential assembly comprising the steps of; - providing first and second housing shells each having at its centre a hollow cylindrical, axially outwardly extending bearing stub; - providing a drive wheel blank with a central recess and forming a toothed rim into the outer periphery of the drive wheel blank to obtain a drive wheel; and - assembling the housing shells and the drive wheel in order to obtain a gear housing which is rigidly enclosed by the toothed rim. First the drive wheel blank is press-fitted to the first housing shell and then the toothed rim is machined into the outer periphery of the drive wheel blank.

US2007/238572A1 discloses a method for assembling a differential assembly for a work machine. A hub includes a plurality of spokes and an outer rim portion. The method comprises a step of coupling a spoked hub with a ring gear. The document mentions that the step of coupling the spoked hub with the ring gear may comprise bolting the ring gear to a flange on the hub.

The differential assembly of DE 102019123969 comprises differential pinion gears rotatably arranged on a rod extending through the drive wheel. The rod is fixed in the differential assembly between the first and second housing shells.

### SUMMARY

It would be advantageous to achieve an alternative differential assembly. In particular, it would be desirable to enable a differential assembly being resistant to internal wear. To better address one or more of these concerns, one or more of a differential assembly, a vehicle, and a method having the features defined in the independent claims is provided. According to an aspect there is provided a differential assembly comprising a gear wheel provided with circumferentially extending outer cogs and having a rotational axis, a differential cross arranged within the gear wheel with arms of the differential cross arranged perpendicularly to the rotational axis, differential pinions rotatably arranged on the arms of the differential cross, a first outgoing axle provided with a first differential gear, and a second outgoing axle provided with a second differential gear, the first and second outgoing axles extending in opposite directions concentrically with the rotational axis and the first and second differential gears engaging with the differential pinions. An inner circumference of the gear wheel is provided with radially extending recesses, and each arm of the differential cross engages with one of the radially extending recesses via an interference fit.

Since the inner circumference of the gear wheel is provided with the radially extending recesses and since each arm of the differential cross engages with one of the radially extending recesses via the interference fit - the differential cross is securely engaged with the gear wheel. Accordingly, no play is provided between the differential cross and the gear wheel. Since during use of the differential assembly, torque is transmitted from the gear wheel via the differential cross and the differential pinions to the differential gears, and since the connection between the gear wheel and the differential cross includes the interference fit, it is ensured that the torque transfer does not cause wear to between the gear wheel and the differential cross.

According to a further aspect there is provided a method for assembling a differential assembly. The differential assembly comprises a gear wheel having a rotational axis, a differential cross to be arranged within the gear wheel with arms of the differential cross arranged perpendicularly to the rotational axis, differential pinions to be rotatably arranged on the arms of the differential cross, a first outgoing axle provided with a first differential gear, and a second outgoing axle provided with a second differential gear, the first and second outgoing axles being configured to extend in opposite directions concentrically with the rotational axis and the first and second differential gears being configured to be engaged with the differential pinions. An inner circumference of the gear wheel is provided with radially extending recesses. The method comprises a step of:
- positioning the arms of the differential cross in the radially extending recesses to provide an interference fit between each arm of the differential cross and a respective one of the radially extending recesses.

Since the arms of the differential cross are positioned in the radially extending recesses to provide the interference fit between each arm of the differential cross and a respective one of the radially extending recesses - as discussed above, the differential assembly assembled in this manner will ensure that during use of the differential assembly, torque transfer between the gear wheel and the differential cross does not cause wear between the gear wheel and the differential cross.

In comparison, in the differential assembly of the prior art according to DE 102019123969 mentioned above, where the rod on which the differential pinions are arranged, are secured to the assembly via the first and second housing shells, the rod and/or the gear wheel at the pockets into which the rod is laid, are prone to wear as the differential pinions are subjected to load which is transferred to the rod. (The pockets of the gear wheel correspond to the recesses of the gear wheel of the herein discussed differential assembly.)

In the prior art, ease of assembling of the journals of the differential pinions, such as the rod of the differential assembly of DE 102019123969, in the gear wheel has been prioritised.

It has been realised by the inventors that if ease of assembling is sacrificed and an interference fit is provided, good resistance against wear between the gear wheel and the differential cross is instead achieved.

Further, the differential assembly provides an axially compact design for the differential assembly since the gear wheel may form a radially outer portion of the differential assembly, the differential cross engaging with the gear wheel and the differential pinions and the differential gears being arranged radially within the gear wheel.

The gear wheel may be a cogwheel with the outer cogs extending radially from the gear wheel.

Herein, the differential assembly may also be referred to simply as the assembly.

The basic construction of a differential assembly is well known and in the technical field various terms may be used for a differential assembly and the components of the differential assembly, such as e.g. for: the differential assembly - differential gear or differential; the gear wheel - final gear wheel or crown wheel or ring gear; the differential cross - carrier; the differential pinions - differential pinion gears or planetary gear wheels or planet gears; and the differential gear - sun gear.

Unless otherwise defined, herein the terms axial, axially, axial direction, and axial extension refer to a direction concentrically or in parallel with the rotational axis of the gear wheel and the terms radial, radially, radial direction, and radial extension refer to a direction perpendicularly to the rotational axis of the gear wheel.

The gear wheel may be a final gear wheel with which a pinion of a powertrain engages. The powertrain may be a powertrain of a land-based vehicle.

The gear wheel may be a final gear wheel of a transmission of a powertrain.

The powertrain may include at least one electrically powered torque producing unit, such as an electric motor.

During use of the assembly, and if neither of the first and second gear wheels is standing still, all components of the assembly rotate about the rotational axis. Specifically, the differential cross, the differential gears, and the outgoing axes are rotating concentrically with the rotational axis of the gear wheel. Since the arms of the differential cross extend perpendicularly to the rotational axis of the gear wheel, rotational axes of the differential pinions also extend perpendicularly to the rotational axis of the gear wheel. However, since the differential cross rotates about the rotational axis, the differential pinions will rotate together with the rotational cross about the rotational axis.

The differential cross has four arms and one differential pinion is rotatably arranged on each arm of the differential cross.

The first and second differential gears may comprise cogs which engage with cogs of the differential pinions.

The differential gears and the differential pinions may form bevel gears where the respective rotational axes of the differential pinions are arranged at 90 degrees to the rotational axis of the first and second differential gears and the gear wheel. The differential gears and the differential pinions are conically shaped.

During use of the assembly, as in any differential assembly, the differential pinions do not rotate about their respective rotational axes as long as both outgoing shafts rotate in the same direction with the same rotational speed.

The first outgoing axle may form one part together with the first differential gear. Alternatively, the first outgoing axle and the first differential gear may form separate parts which are rotationally locked to each other. The same applies to the second outgoing axle and the second differential gear.

The centre of the gear wheel is provided with an opening or a through hole in the axial direction of the gear wheel for the differential cross, the differential pinions, and at least part of the differential gears to be arranged within the gear wheel.

The radially extending recesses of the gear wheel are provided in the material of the gear wheel i.e., the radially extending recesses are formed in a body of the gear wheel.

The term interference fit refers to one of the three types of engineering fits: Clearance fit, location or transition fit, and interference fit.

The interference fit may be achieved by pressing outer ends of the arms of the differential cross into the radially extending recesses of the gear wheel. Alternatively, the differential cross may be cooled and/or the gear wheel heated prior to assembling of the differential cross in the radially extending recesses of the gear wheel.

Accordingly, the step of positioning the arms of the differential cross in the radially extending recesses of the method may comprise one or more of steps of:
- pressing the arms of the differential cross into the radially extending recesses to provide the interference fit, and/or
- cooling the differential cross and/or heating the gear wheel prior to assembling of the differential cross in the radially extending recesses of the gear wheel to provide the clearance fit once the differential cross and the gear wheel have the same temperature.

According to embodiments, the differential assembly may comprise a first differential housing half and a second differential housing half fixedly mounted to the gear wheel and together with the gear wheel may enclose the differential cross, the differential pinions, and the first and second differential gears from opposite sides along the rotational axis. The first outgoing axle may extend through the first differential housing half and the second outgoing axle extends through the second differential housing half. The first differential housing half may be provided with a first set of axial recesses at an axial end facing the gear wheel. The arms of the differential cross may engage with the first set of axial recesses. The second differential housing half may be provided with a second set of axial recesses at an axial end facing the gear wheel and the arms of the differential cross may engage with the second set of axial recesses. In this manner, a direct transfer of torque between e.g., the first housing haft and the differential cross may be provided via the arms of the differential cross engaging with the first set of axial recesses of the first differential housing half. This may for instance be utilised under certain operating conditions of the differential assembly, such as with the differential assembly locked. See further below.

Accordingly, as discussed above, the differential cross, the differential pinions, and at least part of the first and second differential gears may be arranged within the gear wheel. Thus, the first and second differential housing halves together with the gear wheel may enclose the differential cross, the differential pinions, and the first and second differential gears.

The arms of the differential cross may extend outside the radial recesses of the gear wheel in an axial direction in order for the arms of the differential cross to engage with the first set of axial recesses in the first differential housing half and/or in order for the arms of the differential cross to engage with the second set of axial recesses in the second differential housing half.

According to embodiments, the first differential housing half and the second differential housing half may be connected to each other via bolts extending in parallel with the rotational axis through the gear wheel. In this manner, the first and second differential housing halves may be pressed against the gear wheel. Also, by the first and second differential housing halves being connected to each other via the bolts, the first set of axial recesses of the first differential housing half may be brought into engagement with the arms of the differential cross and/or the second set of axial recesses of the second differential housing half may be brought into engagement with the arms of the differential cross.

According to embodiments, the differential assembly may comprise a locking sleeve arranged concentrically around the first outgoing axle and an interface for releasable engagement between the locking sleeve and the first differential housing half, wherein the locking sleeve may be rotationally locked to the first outgoing axle and movable along the rotational axis in order to engage and release the interface. In this manner, the differential assembly may be locked by engaging the interface between the first outgoing axle and the first differential housing half. Conversely, the differential assembly may be unlocked by releasing the interface between the first outgoing axle and the first differential housing half.

When the differential assembly is locked, the first and second outgoing axles are locked in relation to each other such that they are only rotatable with the same rotational speed. When the differential assembly is unlocked, the first and second outgoing axles are rotatable at different rotational speeds and the differential assembly provides its intended function as a differential.

According to embodiments, a radially outer end of each arm of the differential cross may comprise two surfaces extending in parallel with each other. The interference fit may be provided between the two surfaces and mating parallel surfaces of the relevant radial recess. In this manner, the interference fit may be provided between two parallel surfaces of the radially outer ends of the differential cross and surfaces deliming at least in part the radial recesses at the inner circumference of the gear wheel.

According to embodiments, a radially outer end of each arm of the differential cross may comprise two surfaces extending substantially in parallel with each other. Again, the interference fit may be provided between the two surfaces and mating surfaces of the relevant radial recess. In this manner, the interference fit may be provided between two substantially parallel surfaces of the radially outer ends of the differential cross and surfaces deliming at least in part the radial recesses at the inner circumference of the gear wheel.

For instance, the two surfaces extending substantially in parallel with each other may extend at an angle within a range of 0.01 - 2 degrees to each other. In this manner, compensation may be provided for when the arms of the differential cross bend under load. This so, due to a more even distribution of pressure over the contact surface between one of the surfaces of the two substantially parallel surfaces of the radially outer ends of the differential cross and one of the surfaces deliming at least in part the radial recesses at the inner circumference of the gear wheel.

According to embodiments each of the two surfaces of the radially outer end of each arm of the differential cross may be a convex surface. In this manner, assembling of the differential cross in the radial recesses of the gear wheel may be facilitated despite the fit between the arms of the differential cross and the radial recesses being an interference fit.

Namely, due to each of the two surfaces being a convex surface, a portion of the radially outer end of each arm of the differential cross may be more easily positioned in the relevant radial recess during the assembling of the differential cross in the gear wheel than if the interference fit is provided by engagement between flat surfaces. This so, since the interference fit may be achieved by the widest portion of the radially outer end of the relevant arm of the differential cross, the widest portion being formed between the highest portions of the two convex surfaces of the radially outer end of the relevant arm.

According to embodiments, the convex surface may be convex within a range of 0.02 - 1 % of a length tangentially along an extension of the convex surface. In this manner, a suitable convexity may be provided.

According to embodiments, the differential assembly, with the interface between the locking sleeve and the first differential housing half engaged, torque may be transferrable between the first and second outgoing axles via the first differential gear, the locking sleeve, the interface, the first differential housing half, the first set of axial recesses of the first differential housing half, the differential cross, and the second differential gear. In this manner, at least part of the torque may be transferred between the first and second differential gears via the first differential housing half directly to the differential cross instead of via the differential gear and the differential pinions when the differential assembly is locked.

According to a further aspect there is provided a vehicle comprising a powertrain including a differential assembly according to any one of aspects and/or embodiments discussed herein.

Further features of, and advantages with, the invention will become apparent when studying the appended claims and the following detailed description.

### BRIEF DESCRIPTION OF THE DRAWINGS

Various aspects and/or embodiments of the invention, including its particular features and advantages, will be readily understood from the example embodiments discussed in the following detailed description and the accompanying drawings, in which:
Fig. 1 illustrates a vehicle according to embodiments,
Fig. 2 schematically illustrates embodiments of a powertrain of a vehicle,
Figs. 3a - 3c illustrate various views of a differential assembly according to embodiments,
Figs. 4a - 4c schematically illustrate a portion of a differential cross,
Fig. 5 illustrates a method for assembling a differential assembly.

### DETAILED DESCRIPTION

Aspects and/or embodiments of the invention will now be described more fully. Like numbers refer to like elements throughout. Well-known functions or constructions will not necessarily be described in detail for brevity and/or clarity.

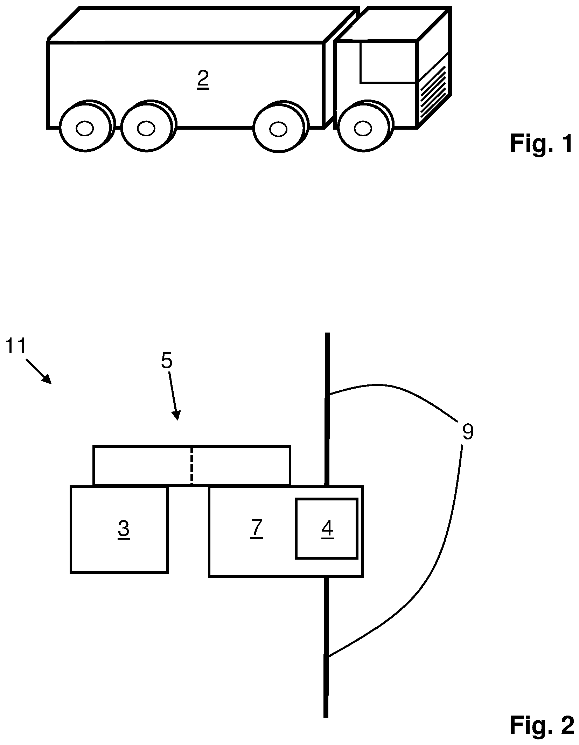

**Fig. 1** schematically illustrates embodiments of a vehicle 2 configured for land-based propulsion. The vehicle 2 comprises a differential assembly according to any one of aspects and/or embodiments discussed herein, such as e.g. the differential assembly 4 discussed below with reference to **Figs. 2** - **4b****.**

In these embodiments, the vehicle 2 is a heavy duty vehicle in the form of a truck. However, the invention is not limited to any particular type of vehicle configured for land-based propulsion.

The vehicle 2 comprises a powertrain including the differential assembly. The powertrain may include at least one electric machine.

**Fig. 2** schematically illustrates embodiments of a powertrain 11 of a vehicle.

The powertrain 11 may be a powertrain 11 for a vehicle 2 as discussed above with reference to **Fig. 1****,** or to any other kind of vehicle configured for land-based propulsion.

The powertrain 11 comprises an electric machine 3, such as an electric motor/generator, at least one transmission 5, a final drive 7, a differential assembly 4 as discussed herein, and two drive shafts 9. The torque provided by the electric machine 3 is transferred via the at least one transmission 5 to the final drive 7 and the differential assembly 4. From the differential assembly 4 the torque is distributed between each of drive shafts 9 to drive wheels of the vehicle in order to propel the vehicle.

The differential assembly 4 may be used in other kinds of drivetrains than the illustrated drivetrain 11.

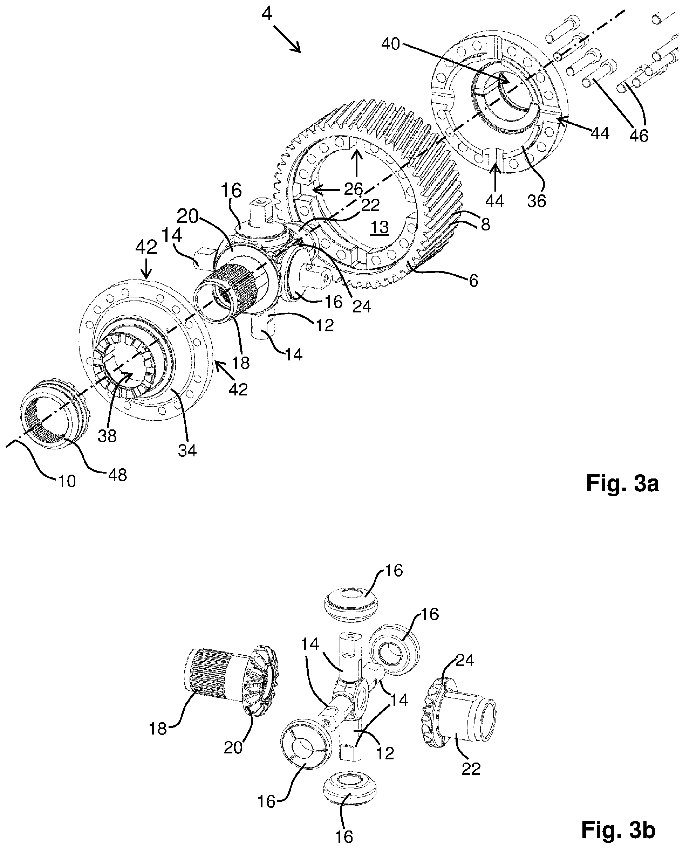

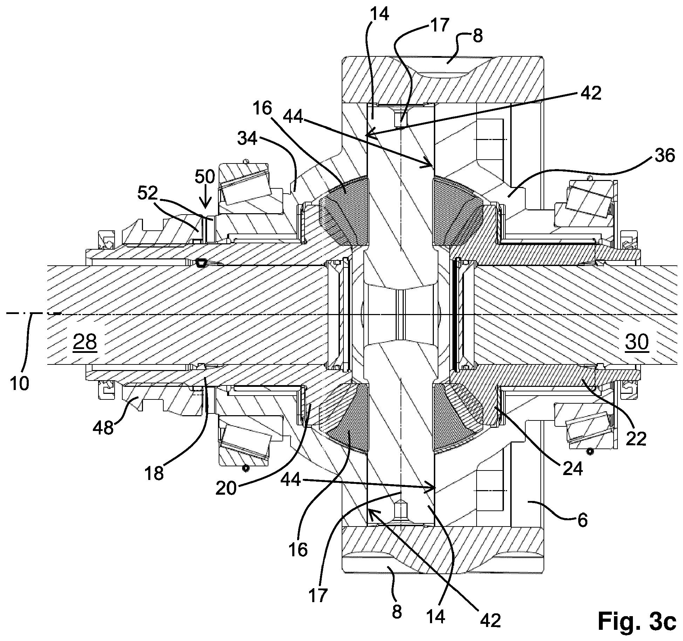

**Figs. 3a - 3c** illustrate various views of a differential assembly 4 according to embodiments. **Fig. 3a** shows an exploded view of the differential assembly 4. **Fig. 3b** shows an exploded view of a portion of the differential assembly 4. **Fig. 3c** shows a cross sectional side view along a rotational axis 10 through the differential assembly 4.

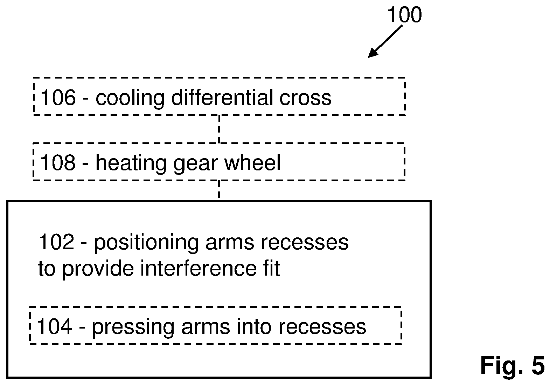

The differential assembly 4 may be configured to form part of a powertrain of a vehicle, such as e.g. the vehicle 2 and powertrain 11 discussed with reference to **Figs. 1 and 2****.** The assembly 2 may be assembled in accordance with a method 100 as discussed below with reference to **Fig. 5****.**

The assembly 4 comprises a gear wheel 6, a differential cross 12 arranged within the gear wheel 6, differential pinions 16, a first outgoing axle 18 provided with a first differential gear 20, and a second outgoing axle 22 provided with a second differential gear 24.

The gear wheel 6 is provided with circumferentially extending outer cogs 8. The gear wheel 6 has a rotational axis 10. The differential cross 12 is arranged within a central opening 13 of the gear wheel 6. Also, the differential pinions 16 and at least part of the differential gears 22, 24 may be arranged within the opening 13.

Arms 14 of the differential cross 12 are arranged perpendicularly to the rotational axis 10 i.e., the arms 14 extend radially from the rotational axis 10. The differential pinions 16 are rotatably arranged on the arms 14 of the differential cross 12. That is, one differential pinion 16 is journaled on each arm 14 of the differential cross 12.

Accordingly, each of the differential pinions 16 rotates about a respective rotational axis 17 coinciding with the radial extension of one of the arms 14 of the differential cross 12.

The differential cross 12 has four arms 14 and one differential pinion 16 is rotatably arranged on each arm 14 of the differential cross 12.

The first and second outgoing axles 18, 22 extend in opposite directions concentrically with the rotational axis 10. The first and second differential gears 20, 24 engage with the differential pinions 16. The first and second differential gears 20, 24 comprise cogs which engage with cogs of the differential pinions 16.

In the illustrated embodiments, the first and second outgoing axles 18, 22 each form one part together with the respective first and second differential gear 20, 24. Alternatively, the axles 18, 22 may form separate parts which are rotationally locked to the differential gears 20, 24.

In the illustrated embodiments, the first and second outgoing axles 18, 22 are hollow with respective shafts 28, 30 extending into the hollow first and second outgoing axles 18, 22 and being rotationally locked in the first and second outgoing axles 18, 22, see **Fig. 3c****.** Thus the shafts 28, 30 are arranged to transfer the rotations of the first and second outgoing axles 18, 22 to drive wheels of the vehicle. Alternatively, the first and second outgoing axles 18, 22 may extend longer along the rotational axis 10 than shown in **Fig. 3c** to transfer their rotations to drive wheels of the vehicle without corresponding shafts 28, 30.

An inner circumference of the gear wheel 6 is provided with radially extending recesses 26. Each arm 14 of the differential cross 12 engages with one of the radially extending recesses 26 via an interference fit.

Mentioned purely as examples: An outer diameter of the gear wheel 6 may be within a range of 200 - 400 mm, the differential cross 12 may have an extension between ends of oppositely extending arms 14 within a range of 120 - 200 mm, the arms 14 of the differential cross 12 may have a diameter within a range of 30 - 50 mm where the differential pinions 16 are journaled on the arms 14, and the interference fit may be a fit with a H7/p6 or a H7/s6 tolerance or a fit with a P7/h6 or a S7/h6 tolerance.

The differential assembly 4 comprises a first differential housing half 34 and a second differential housing half 36 fixedly mounted to the gear wheel 6 and together with the gear wheel 6 enclosing the differential cross 12, the differential pinions 16, and the first and second differential gears 20, 24 from opposite sides along the rotational axis 10.

The first outgoing axle 18 extends through the first differential housing half 34 and the second outgoing axle 22 extends through the second differential housing half 36. For this purpose each of the first and second housing halves 34, 36 is provided with a through hole 38, 40 concentrically with the rotational axis 10.

During use of the assembly 4, the first and second housing halves 34, 36 rotate together with the gear wheel 6. As long as the first and second outgoing axles 18, 22 rotate with the same rotational speed - the axles 18, 22, the first and second housing halves 34, 36, and the gear wheel 6 rotate with the same rotational speed. When the first and second outgoing axles 18, 22 rotate with different rotational speeds - the axles 18, 22 rotate relative to the first and second housing halves 34, 36 in the through holes 38, 40.

The first differential housing half 34 is provided with a first set of axial recesses 42 at an axial end of the first differential housing half 34 facing the gear wheel 6. The arms 14 of the differential cross 12 engage with the first set of axial recesses 42.

The second differential housing half 36 is provided with a second set of axial recesses 44 at an axial end of the second differential housing half 36 facing the gear wheel 6. The arms 14 of the differential cross 12 engage with the second set of axial recesses 44.

That is, a portion of the gear wheel 6 is dimensioned in an axial direction such that the arms 14 of the differential cross 12 extend axially outside the radially extending recesses 26 of the gear wheel 6. Thus, the first and second differential housing halves 34, 36 fixedly mounted to the gear wheel 6 will provide for the arms 14 of the differential cross 12 to engage with the first set of axial recesses 42 and with the second set of axial recesses 44.

The first and second differential housing halves 34, 36 are connected to each other via bolts 46, extending in parallel with the rotational axis 10 through the gear wheel 10.

As in the illustrated embodiments, the bolts 46 extend through holes in the second differential housing half 36 and through holes in the gear wheel 6 in order to threadedly engage with threaded holes in the first differential housing half 34. Thus, the first and second differential housing halves 34, 36 are fixedly mounted to the gear wheel 6.

Alternative ways of fixedly mounting the first and second differential housing halves 34, 36 to the gear wheel 6 are envisaged. Separate bolts may extend through each of the housing halves 34, 36 and threadedly engage with the gear wheel 6. A further alternative may be for bolts to extend through the housing halves 34, 36 and the gear wheel 6 and be tightened with nuts.

The differential assembly 4 comprises a locking sleeve 48 arranged concentrically around the first outgoing axle 18 and an interface 50 for releasable engagement between the locking sleeve 18 and the first differential housing half 34. The locking sleeve 48 is rotationally locked to the first outgoing axle 18 and movable along the rotational axis 10 in order to engage and release the interface 50.

The interface 50 comprises teeth 52 extending axially from the locking sleeve 48 and from the first differential housing half 34. Moving the locking sleeve 48 axially towards the first differential housing half 34 will engage the teeth 52 with each other and accordingly, will engage the interface 50. Moving the locking sleeve 48 axially away from the first differential housing half 34 will release the teeth 52 from each other and accordingly, will release the interface 50.

The locking sleeve 48 may be rotationally locked to the first outgoing axle 18 via splines. Such splines will permit axial movement of the locking sleeve 48 on the first outgoing axle 18.

When the interface 50 is engaged, the differential assembly 4 is locked. When the interface 50 is released, the differential assembly 4 is unlocked. In **Fig. 3c****,** the interface 50 is released.

During use of the assembly 4, with the interface 50 between the locking sleeve 48 and the first differential housing half 34 engaged, torque may be at least partially transferred between the first and second outgoing axles 18, 22 via the locking sleeve 48, the interface 50, the first differential housing half 34, the first set of axial recesses 42 of the first differential housing half 34, the differential cross 12, the differential pinions 16, and the second differential gear 24.

In the interface 50, the torque is transferred between the teeth 52 of the locking sleeve 48 and the teeth 52 of the first differential housing half 34.

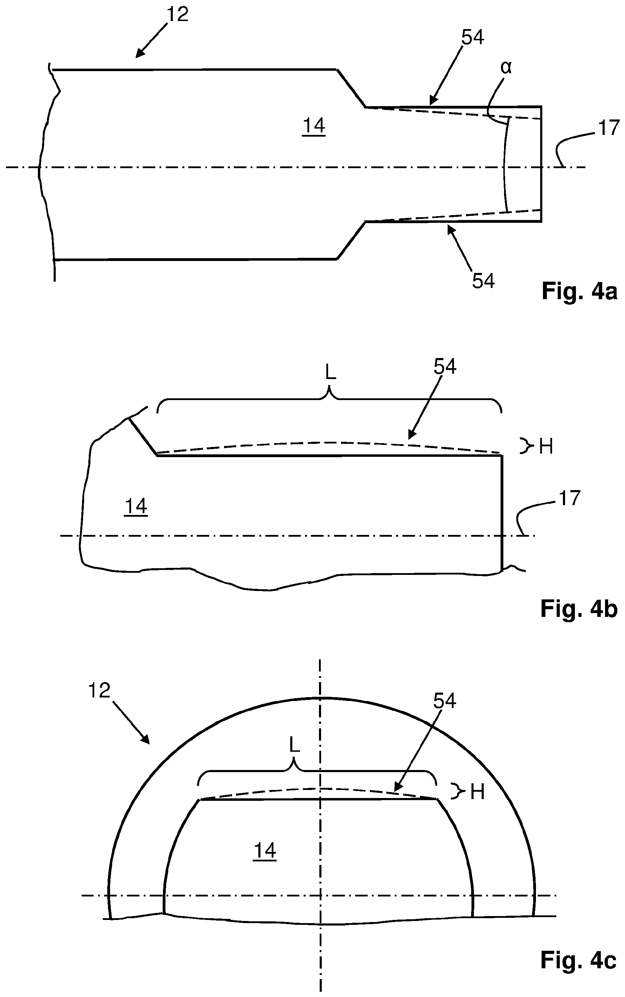

**Figs. 4a - 4c** schematically illustrate a portion of an arm 14 of the differential cross 12 of the differential assembly 4 discussed above. **Figs. 4a and 4b** show side views of an end portion the arm 14 i.e., a view towards the rotational axis 17 of the differential pinion. **Fig. 4c** shows a partial end view of the end portion of the arm 14 i.e., a view along the rotational axis 17 of the differential pinion.

A radially outer end of each arm 14 of the differential cross 12 comprises two surfaces 54 extending in parallel with each other. The two surfaces 54 may extend in parallel with the rotational axis 17 of the differential pinion (not shown) to be journaled on the arm 14.

The herein discussed interference fit between the radially extending recesses 26 in the gear wheel 6 and each arm 14 of the differential cross 12 is provided between the two surfaces 54 of each arm 14 of the differential cross 12 and mating parallel surfaces of the relevant radial recess 26, see also **Fig 3a****.**

As indicated by the broken lines in **Fig. 4a****,** a radially outer end of each arm 14 of the differential cross 12 may comprise two surfaces 54 extending at an angle α within a range of 0.01 - 2 degrees to each other. Again, the interference fit is provided between the two surfaces 54 and mating surfaces of the relevant radial recess 26. Thus, the two surfaces 54 at the radially outer end of each arm 14 of the differential cross 12 may extend substantially in parallel with each other.

Put differently, each of the surfaces 54 may extend at an angle α/2 to the rotational axis 17 of the differential pinion.

For the sake of clarity, the angle α has been exaggerated in **Fig. 4a****.**

According to some embodiments, each of the two surfaces 54 of the radially outer end of each arm 14 of the differential cross 12 may be a convex surface, as indicated by the broken line in **Fig. 4b** and/or in **Fig. 4c****.** Irrespective of whether the two surfaces 54 extend in parallel with each other or substantially in parallel with each other, the surfaces 54 may be convex surfaces.

In such embodiments with convex surfaces, a plane of each of the two surfaces 54 may be a tangential plane of the relevant surface 54. Accordingly, the two surfaces 54 are parallel if the tangential planes of the two convex surfaces 54 extend in parallel. Similarly, an angle α between the two convex surfaces 54 is determined by the angle α between the tangential planes of the two convex surfaces 54.

Each convex surface 54 may be convex within a range of 0.02 - 1 % of a length L tangentially along an extension of the convex surface 54.

More specifically, the convexity is calculated by a quota between a height H of a highest point of the convex surface 54 above a flat surface extending between end points of the length L tangentially along the extension of the convex surface 54.

Accordingly, 0.02 % ≤ H/L ≤ 1 %.

The extension of the convex surface 54 may be an extension in parallel with the rotational axis 17 of the differential pinion as shown in **Fig. 4b****.** Alternatively, the extension of the convex surface 54 may be an extension across the rotational axis 17 of the differential pinion as shown in **Fig. 4c****.**

According to some embodiments, the convex surface 54 is convex in only one direction i.e., either in parallel with the rotational axis 17 of the pinion gear or across the rotational axis 17 of the pinion gear.

According to some embodiments, the convex surface 54 is convex in both directions i.e., in parallel with, and across, the rotational axis 17 of the pinion gear.

Accordingly, the interference fit will be provided at least at the widest portion of the two convex surfaces 54 at the radially outer end of the arm 14 and the radial recess 26 of the gear wheel 6. The widest portion between the two convex surfaces 54 will be between the highest points of the two parallel convex surfaces 54.

**Fig. 5** illustrates a method 100 for assembling a differential assembly. The differential assembly may be an assembly 4 according to any one of aspects and/or embodiments discussed herein. Thus, in the following reference is also made to **Figs. 1 - 4b****.**

Accordingly, the differential assembly 4 comprises a gear wheel 6 having a rotational axis 10, a differential cross 12 to be arranged within the gear wheel 6 with arms 14 of the differential cross 12 arranged perpendicularly to the rotational axis 10, differential pinions 16 to be rotatably arranged on the arms 14 of the differential cross12, a first outgoing axle 18 provided with a first differential gear 20, and a second outgoing axle 22 provided with a second differential gear 24. The first and second outgoing axles 18, 22 are configured to extend in opposite directions concentrically with the rotational axis 10 and the first and second differential gears 20, 24 are configured to be engaged with the differential pinions 16. An inner circumference of the gear wheel 6 is provided with radially extending recesses 26.

The method 100 comprises a step of:
- positioning 102 the arms 14 of the differential cross 12 in the radially extending recesses 26 to provide an interference fit between each arm 14 of the differential cross 12 and a respective one of the radially extending recesses 26.

The step of positioning 102 the arms 14 of the differential cross 12 in the radially extending recesses 26 may comprise a step of:
- pressing 104 the arms 14 of the differential cross 12 into the radially extending recesses 26 to provide the interference fit.

According to some embodiments, prior to the step of positioning 102 the arms 14 of the differential cross 12 in the radially extending recesses 26, the method 100 may comprise one or more steps of:
- cooling 106 the differential cross 12 and/or heating 108 the gear wheel 6 to provide the clearance fit once the differential cross 12 and the gear wheel 6 have the same temperature.

It is to be understood that the foregoing is illustrative of various example embodiments and that the invention is defined only by the appended claims. A person skilled in the art will realize that the example embodiments may be modified, and that different features of the example embodiments may be combined to create embodiments other than those described herein, without departing from the scope of the invention, as defined by the appended claims.

## Claims

1. A differential assembly (4) comprising a gear wheel (6) provided with circumferentially extending outer cogs (8) and having a rotational axis (10), a differential cross (12) arranged within the gear wheel (6) with arms (14) of the differential cross (12) arranged perpendicularly to the rotational axis (10), differential pinions (16) rotatably arranged on the arms (14) of the differential cross (12), a first outgoing axle (18) provided with a first differential gear (20), and a second outgoing axle (22) provided with a second differential gear (24), the first and second outgoing axles (18, 22) extending in opposite directions concentrically with the rotational axis (10) and the first and second differential gears (20, 24) engaging with the differential pinions (16), **characterized in that**
an inner circumference of the gear wheel (6) is provided with radially extending recesses (26), and wherein
each arm (14) of the differential cross (12) engages with one of the radially extending recesses (26) via an interference fit.

2. The differential assembly (4) according to claim 1, comprising a first differential housing half (34) and a second differential housing half (36) fixedly mounted to the gear wheel (6) and together with the gear wheel (6) enclosing the differential cross (12), the differential pinions (16), and the first and second differential gears (20, 24) from opposite sides along the rotational axis (10), wherein
the first outgoing axle (18) extends through the first differential housing half (34) and the second outgoing axle (22) extends through the second differential housing half (36), wherein
the first differential housing half (34) is provided with a first set of axial recesses (42) at an axial end facing the gear wheel (6), wherein
the arms (14) of the differential cross (12) engage with the first set of axial recesses (42), wherein
the second differential housing half (36) is provided with a second set of axial recesses (44) at an axial end facing the gear wheel (6), wherein
the arms (14) of the differential cross (12) engage with the second set of axial recesses (44).

3. The differential assembly (4) according to claim 2, wherein the first differential housing half (34) and the second differential housing half (36) are connected to each other via bolts (46) extending in parallel with the rotational axis (10) through the gear wheel (6).

4. The differential assembly (4) according to any one of the preceding claims, comprising a locking sleeve (48) arranged concentrically around the first outgoing axle (18) and an interface (50) for releasable engagement between the locking sleeve (48) and the first differential housing half (34), wherein the locking sleeve (48) is rotationally locked to the first outgoing axle (18) and movable along the rotational axis (10) in order to engage and release the interface (50).

5. The differential assembly (4) according to any one of the preceding claims, wherein a radially outer end of each arm (14) of the differential cross (12) comprises two surfaces (54) extending in parallel with each other, and wherein the interference fit is provided between the two surfaces (54) and mating parallel surfaces of the relevant radial recess (26).

6. The differential assembly (4) according to any one of claims 1 - 4, wherein a radially outer end of each arm (14) of the differential cross (12) comprises two surfaces (54) extending at an angle (α) within a range of 0.01 - 2 degrees to each other, and wherein the interference fit is provided between the two surfaces (54) and mating surfaces of the relevant radial recess (26).

7. The differential assembly (4) according to claim 5 or 6, wherein each of the two surfaces (54) of the radially outer end of each arm (14) of the differential cross (12) is a convex surface (54).

8. The differential assembly (4) according to claim 7, wherein the convex surface (54) is convex within a range of 0.02 - 1 % of a length tangentially along an extension of the convex surface (54).

9. The differential assembly (4) according to claims 2 and 4, or according to claims r 5-8 when dependent on claims 2-4, wherein with the interface (50) between the locking sleeve (48) and the first differential housing half (34) engaged, torque is transferrable between the first and second outgoing axles (18, 22) via the locking sleeve (48), the interface (50), the first differential housing half (34), the first set of axial recesses (42) of the first differential housing half (34), the differential cross (12), and the second differential gear (24).

10. A vehicle (2) comprising a powertrain (11) including a differential assembly (4) according to any one of the preceding claims.

11. Method for assembling a differential assembly (4) according to any of claims 1-9, wherein the method comprises a step of:
- positioning (102) the arms (14) of the differential cross (12) in the radially extending recesses (26) to provide an interference fit between each arm (14) of the differential cross (12) and a respective one of the radially extending recesses (26).

## Patentansprüche

1. Differentialanordnung (4), die umfasst: ein Zahnrad (6), das mit sich in Umfangsrichtung erstreckenden Außenverzahnungen (8) versehen ist und eine Drehachse (10) aufweist, ein innerhalb des Zahnrads (6) angeordnetes Differentialkreuz (12), wobei die Arme (14) des Differentialkreuzes (12) senkrecht zu der Drehachse (10) angeordnet sind, drehbar an den Armen (14) des Differentialkreuzes (12) angeordnete Differentialritzel (16), eine erste Abtriebswelle (18), die mit einem ersten Differentialrad (20) versehen ist, und eine zweite Abtriebswelle (22), die mit einem zweiten Differentialrad (24) versehen ist, wobei die erste und die zweite Abtriebswelle (18, 22) sich in entgegengesetzten Richtungen konzentrisch zu der Drehachse (10) erstrecken und das erste und das zweite Differentialrad (20, 24) mit den Differentialritzeln (16) in Eingriff stehen, **dadurch gekennzeichnet, dass**
ein Innenumfang des Zahnrads (6) mit sich radial erstreckenden Aussparungen (26) versehen ist, und wobei
jeder Arm (14) des Differentialkreuzes (12) über Presspassung mit einer der sich radial erstreckenden Aussparungen (26) in Eingriff steht.

2. Differentialanordnung (4) nach Anspruch 1, die eine erste Differentialgehäusehälfte (34) und eine zweite Differentialgehäusehälfte (36) umfasst, die fest an dem Zahnrad (6) angebracht sind und zusammen mit dem Zahnrad (6) das Differentialkreuz (12), die Differentialritzel (16) und das erste und das zweite Differentialrad (20, 24) von gegenüberliegenden Seiten entlang der Drehachse (10) umschließen, wobei
sich die erste Abtriebswelle (18) und die zweite Abtriebswelle (22) durch die erste Differentialgehäusehälfte (34) bzw. zweite Differentialgehäusehälfte (36) erstrecken, wobei
die erste Differentialgehäusehälfte (34) mit einem ersten Satz axialer Aussparungen (42) an einem zu dem Zahnrad (6) weisenden axialen Ende versehen ist, wobei
die Arme (14) des Differentialkreuzes (12) mit dem ersten Satz axialer Aussparungen (42) in Eingriff stehen, wobei
die zweite Differentialgehäusehälfte (36) mit einem zweiten Satz axialer Aussparungen (44) an einem zu dem Zahnrad (6) weisenden axialen Ende versehen ist, wobei
die Arme (14) des Differentialkreuzes (12) mit dem zweiten Satz axialer Aussparungen (44) in Eingriff stehen.

3. Differentialanordnung (4) nach Anspruch 2, wobei die erste Differentialgehäusehälfte (34) und die zweite Differentialgehäusehälfte (36) über Bolzen (46) miteinander verbunden sind, die sich parallel zu der Drehachse (10) durch das Zahnrad (6) erstrecken.

4. Differentialanordnung (4) nach einem der vorangehenden Ansprüche, die eine konzentrisch um die erste Abtriebswelle (18) angeordnete Sicherungshülse (48) und eine Schnittstelle (50) für einen lösbaren Eingriff zwischen der Sicherungshülse (48) und der ersten Differentialgehäusehälfte (34) umfasst, wobei die Sicherungshülse (48) drehfest mit der ersten Abtriebswelle (18) verbunden und entlang der Drehachse (10) bewegbar ist, um die Schnittstelle (50) in und außer Eingriff zu bringen.

5. Differentialanordnung (4) nach einem der vorangehenden Ansprüche, wobei ein radial äußeres Ende eines jeden Arms (14) des Differentialkreuzes (12) zwei parallel zueinander verlaufende Flächen (54) aufweist und wobei die Presspassung zwischen den beiden Flächen (54) und den parallelen Passflächen der entsprechenden radialen Aussparung (26) vorliegt.

6. Differentialanordnung (4) nach einem der Ansprüche 1-4, wobei ein radial äußeres Ende eines jeden Arms (14) des Differentialkreuzes (12) zwei Flächen (54) aufweist, die sich in einem Winkel (α) in einem Bereich von 0,01-2 Grad zueinander erstrecken, und wobei die Presspassung zwischen den beiden Flächen (54) und den Passflächen der entsprechenden radialen Aussparung (26) vorliegt.

7. Differentialanordnung (4) nach Anspruch 5 oder 6, wobei jede der beiden Flächen (54) des radial äußeren Endes eines jeden Arms (14) des Differentialkreuzes (12) eine konvexe Fläche (54) ist.

8. Differentialanordnung (4) nach Anspruch 7, wobei die konvexe Fläche (54) in einem Bereich von 0,02-1 % einer Länge tangential entlang einer Erstreckung der konvexen Fläche (54) konvex ist.

9. Differentialanordnung (4) nach Anspruch 2 und 4 oder nach Anspruch 5-8, sofern von Anspruch 2-4 abhängig, wobei über die Sicherungshülse (48), die Schnittstelle (50), die erste Differentialgehäusehälfte (34), den ersten Satz axialer Aussparungen (42) der ersten Differentialgehäusehälfte (34), das Differentialkreuz (12) und das zweite Differentialrad (24) ein Drehmoment zwischen der ersten und der zweiten Abtriebswelle (18, 22) übertragbar ist, wenn die Schnittstelle (50) zwischen der Sicherungshülse (48) und der ersten Differentialgehäusehälfte (34) in Eingriff steht.

10. Fahrzeug (2) mit einem Antriebsstrang (11), der eine Differentialanordnung (4) nach einem der vorangehenden Ansprüche aufweist.

11. Verfahren zum Zusammenbau einer Differentialanordnung (4) nach einem der Ansprüche 1-9, wobei das Verfahren folgenden Schritt umfasst:
- Positionieren (102) der Arme (14) des Differentialkreuzes (12) in den sich radial erstreckenden Aussparungen (26), um eine Presspassung zwischen jedem Arm (14) des Differentialkreuzes (12) und einer entsprechenden sich radial erstreckenden Aussparung (26) bereitzustellen.

## Revendications

1. Ensemble différentiel (4) comprenant une roue d'engrenage (6) pourvue de dents extérieures (8) s'étendant circonférentiellement et présentant un axe de rotation (10), un croisillon de différentiel (12) agencé au sein de la roue d'engrenage (6) avec des bras (14) du croisillon de différentiel (12) agencés perpendiculairement à l'axe de rotation (10), des pignons différentiels (16) agencés de manière rotative sur les bras (14) du croisillon de différentiel (12), un premier essieu de sortie (18) pourvu d'un premier engrenage différentiel (20), et un deuxième essieu de sortie (22) pourvu d'un deuxième engrenage différentiel (24), les premier et deuxième essieux de sortie (18, 22) s'étendant dans des directions opposées concentriquement à l'axe de rotation (10) et les premier et deuxième engrenages différentiels (20, 24) venant en prise avec les pignons différentiels (16), **caractérisé en ce que**
une circonférence intérieure de la roue d'engrenage (6) est pourvue d'évidements s'étendant radialement (26), et dans lequel
chaque bras (14) du croisillon de différentiel (12) vient en prise avec l'un des évidements s'étendant radialement (26) par l'intermédiaire d'un ajustement serré.

2. Ensemble différentiel (4) selon la revendication 1, comprenant une première moitié de carter de différentiel (34) et une deuxième moitié de carter de différentiel (36) montées de manière fixe sur la roue d'engrenage (6) et enfermant, conjointement avec la roue d'engrenage (6), le croisillon de différentiel (12), les pignons de différentiel (16), et les premier et deuxième engrenages différentiels (20, 24) depuis des côtés opposés le long de l'axe de rotation (10), dans lequel
le premier essieu de sortie (18) s'étend à travers la première moitié de carter de différentiel (34) et le deuxième essieu de sortie (22) s'étend à travers la deuxième moitié de carter de différentiel (36), dans lequel
la première moitié de boîtier de différentiel (34) est pourvue d'un premier ensemble d'évidements axiaux (42) au niveau d'une extrémité axiale faisant face à la roue d'engrenage (6), dans lequel
les bras (14) du croisillon de différentiel (12) viennent en prise avec le premier ensemble d'évidements axiaux (42), dans lequel
la deuxième moitié de boîtier de différentiel (36) est pourvue d'un deuxième ensemble d'évidements axiaux (44) au niveau d'une extrémité axiale faisant face à la roue d'engrenage (6), dans lequel
les bras (14) du croisillon de différentiel (12) viennent en prise avec le deuxième ensemble d'évidements axiaux (44).

3. Ensemble différentiel (4) selon la revendication 2, dans lequel la première moitié de carter de différentiel (34) et la deuxième moitié de carter de différentiel (36) sont reliées l'une à l'autre par l'intermédiaire de boulons (46) s'étendant parallèlement à l'axe de rotation (10) à travers la roue d'engrenage (6).

4. Ensemble différentiel (4) selon l'une quelconque des revendications précédentes, comprenant un manchon de verrouillage (48) agencé de manière concentrique autour du premier essieu de sortie (18) et une interface (50) pour une mise en prise libérable entre le manchon de verrouillage (48) et la première moitié de carter de différentiel (34), dans lequel le manchon de verrouillage (48) est verrouillé de manière rotative sur le premier essieu de sortie (18) et mobile le long de l'axe de rotation (10) afin de venir en prise avec l'interface (50) et de la libérer.

5. Ensemble différentiel (4) selon l'une quelconque des revendications précédentes, dans lequel une extrémité radialement extérieure de chaque bras (14) du croisillon de différentiel (12) comprend deux surfaces (54) s'étendant parallèlement l'une par rapport à l'autre, et dans lequel l'ajustement serré est prévu entre les deux surfaces (54) et des surfaces d'ajustement parallèles de l'évidement radial (26) concerné.

6. Ensemble différentiel (4) selon l'une quelconque des revendications 1 à 4, dans lequel une extrémité radialement extérieure de chaque bras (14) du croisillon de différentiel (12) comprend deux surfaces (54) s'étendant à un angle (α) au sein d'une plage de 0,01 à 2 degrés l'une par rapport à l'autre, et dans lequel l'ajustement serré est prévu entre les deux surfaces (54) et les surfaces d'ajustement de l'évidement radial (26) concerné.

7. Ensemble différentiel (4) selon la revendication 5 ou 6, dans lequel chacune des deux surfaces (54) de l'extrémité radialement extérieure de chaque bras (14) du croisillon de différentiel (12) est une surface convexe (54).

8. Ensemble différentiel (4) selon la revendication 7, dans lequel la surface convexe (54) est convexe au sein d'une plage de 0,02 à 1 % d'une longueur tangentiellement le long d'une extension de la surface convexe (54).

9. Ensemble différentiel (4) selon les revendications 2 et 4, ou selon les revendications 5 à 8 lorsqu'elles dépendent des revendications 2 à 4,
dans lequel avec l'interface (50) entre le manchon de verrouillage (48)
et la première moitié de carter de différentiel (34) mise en prise, le couple peut être transféré entre les premier et deuxième essieux de sortie (18, 22) par l'intermédiaire du manchon de verrouillage (48), de l'interface (50), la première moitié de carter de différentiel (34), du premier ensemble d'évidements axiaux (42) de la première moitié de carter de différentiel (34), du croisillon de différentiel (12) et du deuxième engrenage différentiel (24).

10. Véhicule (2) comprenant un groupe motopropulseur (11) comprenant un ensemble différentiel (4) selon l'une quelconque des revendications précédentes.

11. Procédé d'assemblage d'un ensemble différentiel (4) selon l'une quelconque des revendications 1 à 9,
dans lequel le procédé comprend une étape :
- de positionnement (102) des bras (14) du croisillon de différentiel (12) dans les évidements s'étendant radialement (26) pour fournir un ajustement serré entre chaque bras (14) du croisillon de différentiel (12) et l'un respectif des évidements s'étendant radialement (26).
